(19) Europäisches Patentamt
European Patent Office
Office européen des brevets

(11) **EP 1 363 820 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **02727322.6**

(22) Anmeldetag: **09.02.2002**

(51) Int Cl.:
**B60T 8/36** (2006.01)

(86) Internationale Anmeldenummer:
**PCT/EP2002/001385**

(87) Internationale Veröffentlichungsnummer:
**WO 2002/068250 (06.09.2002 Gazette 2002/36)**

(54) **VENTIL, INSBESONDERE FÜR HYDRAULISCHE KRAFTFAHRZEUG-BREMSANLAGEN**

VALVE, ESPECIALLY FOR HYDRAULIC AUTOMOTIVE BRAKE SYSTEMS

SOUPAPE, NOTAMMENT POUR DES SYSTEMES DE FREINAGE HYDRAULIQUES DE VEHICULES

(84) Benannte Vertragsstaaten:
**DE FR**

(30) Priorität: **22.02.2001 DE 10108522**
**07.04.2001 DE 10117609**
**22.08.2001 DE 10141135**
**22.08.2001 DE 10141136**

(43) Veröffentlichungstag der Anmeldung:
**26.11.2003 Patentblatt 2003/48**

(73) Patentinhaber: **Continental Teves AG & Co. oHG**
**60488 Frankfurt (DE)**

(72) Erfinder: **VOSS, Christoph**
**60386 Frankfurt am Main (DE)**

(56) Entgegenhaltungen:
**EP-A- 0 477 400          DE-A- 3 103 061**
**DE-A- 4 119 467          DE-A- 19 714 292**
**DE-A- 19 827 287          DE-B- 1 111 232**
**US-A- 4 762 300          US-A- 4 995 587**

**Beschreibung**

Die Erfindung betrifft ein Ventil, insbesondere für hydraulische Kraftfahrzeug-Bremsanlagen, nach dem Oberbegriff des Patentanspruchs 1.

Es ist bereits ein Ventil mit Piezoantrieb aus der DE 199 46 827 C1 bekannt, das zum Steuern von Flüssigkeiten ein Ventilglied mit einem Stellkolben und einem Betätigungskolben aufweist. Zwischen dem Stellkolben und dem Betätigungskolben befindet sich eine als hydraulischer Koppler arbeitende Hydraulikkammer, die auf einen Ringkolben und den Betätigungskolben wirkt. Durch die unterschiedlich großen Stirnflächen des Ringkolbens und des Betätigungskolbens ergibt sich eine gestufte Übersetzung des vom Piezoantrieb initiierten Hubs.

Aus der gattungsbildenden US-A-4 995 587 geht ein Ventil mit einem Piezoantrieb hervor, dessen beide Kraftübertragungselemente aus einem Elastomer und einem auf das Elastomer wirksamen Kolben bestehen, die sich bei Aktivierung des Piezoelements je nach Wirkverbindung mit einem Ventilschließglied entweder entgegengesetzt oder gleichgerichtet bewegen, um das Ventil infolge eines Hubs des Ventilschließgliedes zu öffnen oder zu schließen.

In der DE 197 14 292 A ist eine Übertragungsvorrichtung mit einer Druckkammer beschrieben, die im wesentlichen von zwei membranartigen Bauteilen begrenzt ist. Die Druckkammer ist mit einem Übertragungsmedium gefüllt, um die Auslenkung eines am ersten Bauteil anliegenden Aktors auf das zweite Bauteil zu übertragen, das durch die Druckkammer vom ersten Bauteil getrennt ist.

Ferner ist aus der US-A-4 762 300 ein Ventil mit einem Piezoantrieb zur Verwendung in einer schlupfgeregelten Bremsanlage bekannt, mit einer mehrteiligen, in einem Ventilgehäuse beweglich angeordneten Ventilbaugruppe und mit einem Steuergerät zur Beaufschlagung des Piezoantriebs mit Spannungsimpulsen zur Regelung des Bremsdrucks in der Bremsanlage.

Die DE 41 19 467 A1 offenbart eine Vorrichtung zur Kraft- und Hubübersetzung bzw. -übertragung, die nach dem Verdrängerprinzip arbeitet. Hierzu sind in einem Verdrängerarbeitsraum zwei antriebgekoppelte Verdränger und ein dazwischen befindliches Elastomer angeordnet. Die Vorrichtung befindet sich zwischen einem piezoelektrischen Stellaggregat und einem damit antriebgekoppelten Ventilkörper eines Steuer- oder Einspritzventils.

Aus der EP-A-0 477 400 ist eine Anordnung für einen in Hubrichtung wirkenden adaptiven, mechanischen Toleranzausgleich für den Wegtransformator eines piezoelektrischen Aktors bekannt, dessen Auslenkung über einen Hubkolben in eine Hydraulikkammer eingeleitet und über einen Arbeitskolben auf eine anzutreibende, relativ zu positionierende Masse übertragen wird. Ein Teil der Hydraulikkammer ist durch einen flexiblen Körper mit geringer Kompressibilität ausgefüllt.

Es ist die Aufgabe der Erfindung, ein Ventil der gattungsbildenden Art dahingehend zu verbessern, daß ein relativ einfacher, miniaturisierter Aufbau zustande kommt. Das Ventil soll ferner universell einsetzbar sein und eine möglichst gute, einfache Innenabdichtung aufweisen.

Ferner soll dieses Ventil unabhängig von Temperaturschwankungen und unter Einhaltung eines relativ einfachen Aufbaus ein stetiges und komfortables Betriebsverhalten aufweist.

Erfindungsgemäß werden diese Aufgaben für ein Ventil der eingangs genannten Art durch die kennzeichnenden Merkmale des Patentanspruchs 1 gelöst.

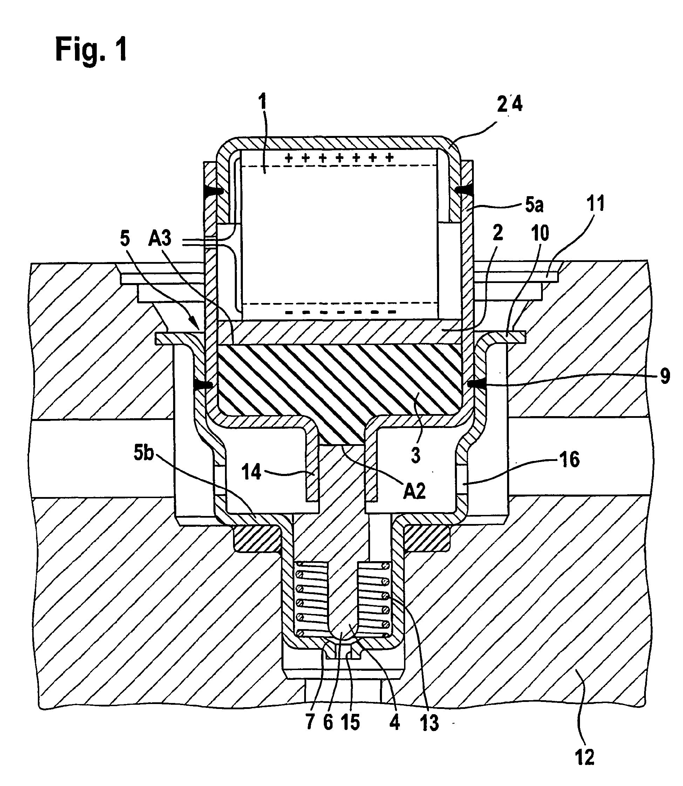

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen gemäß den Figuren 1 bis 3 näher dargestellt und erläutert werden.

Es zeigen:

Figur 1    eine erste Ausführungsform der Erfindung für ein in Grundstellung geöffnetes Ventil,

Figur 2    eine zweite Ausführungsform der Erfindung für ein in Grundstellung geschlossenes Ventil,

Figur 3    eine dritte Ausführungsform der Erfindung für ein in der Grundstellung geöffnetes Ventil, das über temperaturkompensierende Mittel verfügt.

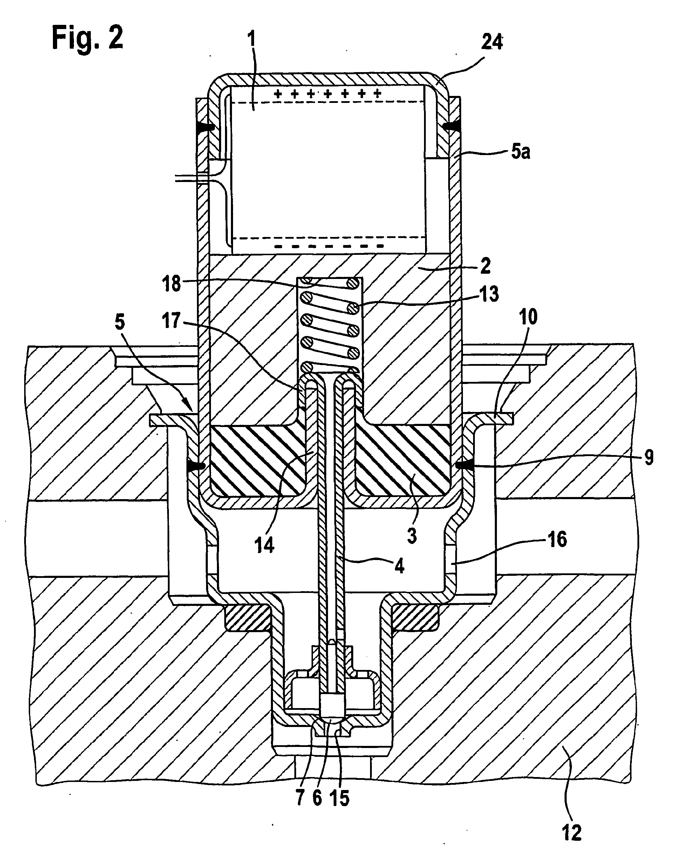

Nachfolgend werden zunächst alle wesentlichen Merkmale der Erfindung herausgestellt, die auf beide Ausführungsbeispiele der Figuren 1 und 2 zutreffen.

Beide Ventile nach Fig. 1, 2 haben einen in einem Ventilgehäuse 5 geführten Ventilstößel 4, der an einem Ende ein Ventilschließglied 6 aufweist. Das Ventilschließglied 6 ist einem im Ventilgehäuse 5 integrierten Ventilsitz 7 zugewandt, wobei das Ventilschließglied 6 mittels eines Piezoelements 1 mittelbar betätigt wird. Hierzu ist erfindungsgemäß zwischen dem Piezoelement 1 und dem Ventilstößel 4 ein erstes als auch ein zweites Kraftübertragungselement 2, 3 angeordnet, wobei das erste Kraftübertragungselement 2 aus einem Werkstoff hoher Festigkeit besteht, das bei elektrischer Aktivierung des Piezoelements 1 das zweite Kraftübertragungselement 3 elastisch verformt und es in Richtung auf den Ventilstößel 4 bewegt. Zur mechanischen Übersetzung der Piezobewegung in Richtung des Ventilstößels 4 ist die an der Stirnfläche des Ventilstößel 4 anliegende Kontaktfläche A2 des zweiten Kraftübertragungselements 3 kleiner als die am ersten Kraftübertragungselement 2 anliegende Kontaktfläche A3 des zur stufenlosen Übersetzung elastisch verformbaren zweiten Kraftübertragungselementes 3. Gleichzeitig ermöglicht die eingangs erwähnte Konstruktion, daß das zweite Kraftübertragungselement 3 den hydraulisch beaufschlagten Innenbereich des Ventilgehäuses 5 gegenüber dem trockenen Innenbereich des Ventilgehäuses 5 auf einfache und absolut sichere Weise abdichtet, wozu das zweite Kraftübertragungselement 3 vorteilhaft aus einem Elastomer, z. B. aus handelsüblichem Gummi, oder einem Silikon besteht. Das zweite Kraftübertragungselement 3 läßt sich besonders einfach durch die Wahl der Einstelltiefe des Piezoelements 1 im Ventilgehäuse 5 vorspannen, um die erforderliche Dichtwirkung des zweiten Kraftübertragungselements 3 als auch die gewünschte Grundeinstellung des Ventilstößels 4 zu realisieren. Hierzu stützt sich das Piezoelement 1 mit seiner vom ersten Kraftübertragungsglied 2 abgewandten Stirnfläche an einem das Ventilgehäuse 5 verschließenden Deckel 24 ab, der zur Einstellung des Piezoelements 1 im Ventilgehäuse 5 verschiebbar ist. Nach dem Abschluß des Einstellvorgangs wird der Deckel 24 beispielsweise mit dem Hüsenabschnitt des Ventilgehäuses 5 verschweißt. Selbstverständlich sind auch kraft- und/oder formschlüssige Arretierungsmöglichkeiten für den Deckel 24 denkbar. Das Piezoelement 1 ist als Piezoblock in Stapelbauweise ausgeführt, und das erste Kraftübertragungselement 2 ist als entlang der Innenwandung des Ventilgehäuses 5 geführter Kolben ausgebildet, der an dem als Kissen gestalteten zweiten Kraftübertragungselement 2 anliegt. Der vorgeschlagene Aufbau des Ventils ermöglicht überdies in der geschlossenen Grundstellung des Ventilschließgliedes 6 eine Sensierung des an ihm anstehenden hydraulischen Drucks, da über die beiden Kraftübertragungselemente 2, 3 eine hydraulische Rückwirkung auf das Piezoelement 1 erfolgt, dessen aus der mechanischen Druckbeanspruchung resultierende elektrische Spannungänderung mittels einer elektronischen Auswerteeinheit in einen Druckwert umgerechnet werden kann.

Nachfolgend werden nunmehr die abgebildeten weiteren Details des Ventils nach Figur 1 beschrieben.

Das Ventil nach Fig. 1 zeigt ein aus zwei abschnittsweise ineinander gefügte Gehäusehülsen 5a, 5b bestehendes Ventilgehäuse 5, die mittels einer Schweißverbindung 9 miteinander im Fügebereich verbunden sind. Die untere Gehäusehülse 5b ist als gestufter Gehäusetopf ausgeführt, dessen nach außen rechtwinklig abgekröpfter Rand 10 in der gestuften Aufnahmebohrung 11 eines blockförmigen Ventilträgers 12 eingestemmt ist. Dieser Gehäusetopf weist an seinem Boden einen erste Druckmittelöffnung 15 mit dem beispielsweise im Prägeverfahren hergestellten Ventilsitz 7 auf. Mittels einer zwischen dem gestuften Ventilstößel 5 und dem Boden eingespannte Druckfeder 13 befindet sich das halbkugelförmige Ventilschließglied 6 in seiner vom Ventilsitz 7 abgehobenen Grundstellung. Der Ventilstößel 4 ist abschnittsweise entlang seinem Schaft in der unteren als auch in der oberen Gehäusehülse 5b, 5a geführt, wozu die koaxial zueinander ausgerichteten beiden Ventilhülsen 5a, 5b abschnittsweise an den Außendurchmesser des Ventilstößels 4 angepaßt sind. Deshalb schließt sich am Boden der oberen Gehäusehülse 5a ein im Innendurchmesser an den Außendurchmesser des Ventilstößels 4 angepaßter Hülsenvorsprung 14 an, in den sich gleichfalls das elastische Kraftübertragungselement 2 bis auf die Stirnfläche des Ventilstößels 4 erstreckt. Auf dem elastischen Kraftübertragungselement 3 befindet sich das als Platte, Scheibe oder Kolben ausgeführte steife Kraftübertragungselement 2, so daß das elastische Kraftübertragungselement 3 nach Art einer Gummi-Reaktionsscheibe zwischen dem ersten Kraftübertragungselement 2 und dem Boden der Gehäusehülse 5a eingespannt ist. Dies führt beim Anlegen einer Spannung an das Piezoelement 1 zur Erzeugung einer Verstellkraft, die auf das steife Kraftübertragungselement wirkt, wodurch sich die Masse des elastischen Kraftübertragungselements 3 in Richtung des geringsten mechanischen Widerstands weiter in die Öffnung des Hülsenvorsprungs 14 verformt, um den Ventilstößel 4 entgegen der Wirkung der nachgiebigen Druckfeder 13 stetig in Richtung des Ventilsitzes 7 zu bewegen. Der initiierte minimale Piezohub wird dann im Verhältnis der kraftbeaufschlagten Stirnflächen A2, A3 am zweiten Kraftübertragungselement 3 im Sinne eines vergrößerten Ventilstößelhubs übersetzt, weshalb die am Hülsenvorsprung 14 gelegene Stirnfläche A2 des zweiten Kraftübertragungselements 3 wesentlich kleiner ist als die vom ersten Kraftübertragungselement 2 beaufschlagte Stirnfläche A3 des zweiten Kraftübertragungselements 3.

Mit dem Anliegen des Ventilschließgliedes 6 am Ventilsitz 7 ist zwangsläufig die Druckmittelverbindung zwischen der im Boden der Gehäusehülse 5b angeordneten Druckmittelöffnung 15 und der oberhalb des Ventilschließgliedes 6 in der Gehäusewandung angeordneten zweiten Druckmittelöffnung 16 unterbrochen.

Anstelle der Verwendung des elastischen Kraftübertragungselements 3 wäre zwar auch eine Verwendung einer Flüssigkeitsfüllung, z.B. Silikonöl o. dgl. denkbar, allerdings würde dies an den Grenzflächen der Flüssigkeit eine Abdichtmaßnahmen im Ventilgehäuse 5 erfordern, um ein Flüssigkeitsverlust und/oder eine Vermischung unterschiedlicher Flüssigkeiten zu verhindern.

Das Ventilgehäuse 5 und der Deckel 24 sind durch Tiefziehen von Dünnblech einfach in der abgebildeten Kontur hergestellt.

Die Figur 2 zeigt abweichend von Figur 1 ein in Grundstellung geschlossenes Ventil, was konstruktiv auf verblüffend einfache Weise durch geringfügige konstruktive Veränderungen des in Figur 1 vorgestellten Ventils realisiert ist. Hierzu kann die aus Figur 1 bekannte Anordnung des Ventilstößels 4, der beiden Kraftübertragungselemente 2, 3 und des Piezoelements 1 auch für das Ventil nach Figur 2 beibehalten werden. Auch der Deckel 24 kann von Figur 1 identisch übernommen werden. Es ändert sich lediglich geringfügig die Anordnung der Druckfeder 13 und der durch Tiefziehen hergestellte Hülsenvorsprung 14, der nunmehr in umgekehrter Richtung auf die im ersten Kraftübertragungselement 2 eingesetzte Druckfeder 13 gerichtet ist. Hierzu ist das erste Kraftübertragungselement 2 als Kolben mit einer zentralen Sackbohrung 18 versehen, deren Bohrungsdurchmesser an den Außendurchmesser des Stößelkragens 17 angepaßt ist, auf dem sich die Druckfeder 13 abstützt. Der Ventilstößel 4 besteht aus einer Hülse, dessen zu einem Stößelkragen 17 um 180 Grad abgekröpftes Ende auf einer kleinen Ringstirnfläche des zweiten Kraftübertragungselements 3 anliegt, während das auf den Ventilstößel 4 gerichtete Windungsende der Druckfeder 13 auf dem Außenradius der Abkröpfung ruht. Beim elektrischen Bestromen des Piezoelements 1 führt dessen geringfügige Expansion zu einem simultanen Hub des ersten Kraftübertragungselements 2 in Richtung des elastischen Kraftübertragungselements 3, dessen Masse infolge der Einbettung im starren Ventilgehäuse 5 ausschließlich in Richtung des von der Druckfeder 13 vorgespannten Stößelkragens 17 ausweichen kann, so daß durch die Verformung des Kraftübertragungselements 3 in Richtung des Stößelkragens 17 das Ventilschließglied 6 am Ventilstößel 4 von seinem Ventilsitz 7 abhebt und damit die Druckmittelverbindung innerhalb des Ventils freigibt. Damit wird auch beim Ventil nach Figur 2 der initiierte minimale Piezohub im Verhältnis der beaufschlagten Stirnflächen am zweiten Kraftübertragungselement 3 im Sinne eines vergrößerten Ventilstößelhubs übersetzt, weshalb die im Hülsenvorsprung 14 in Richtung des Stößelkragens 17 verformbare Ringstirnfläche des zweiten Kraftübertragungselements 3 wesentlich kleiner ist als die vom ersten Kraftübertragungselement 2 beaufschlagte Ringstirnfläche des zweiten Kraftübertragungselements 3.

Soweit nicht auf alle in Figur 2 abbgebildeten Details eingegangen wurde, entsprechen diese dennoch der Beschreibung des Gegenstands nach Figur 1.

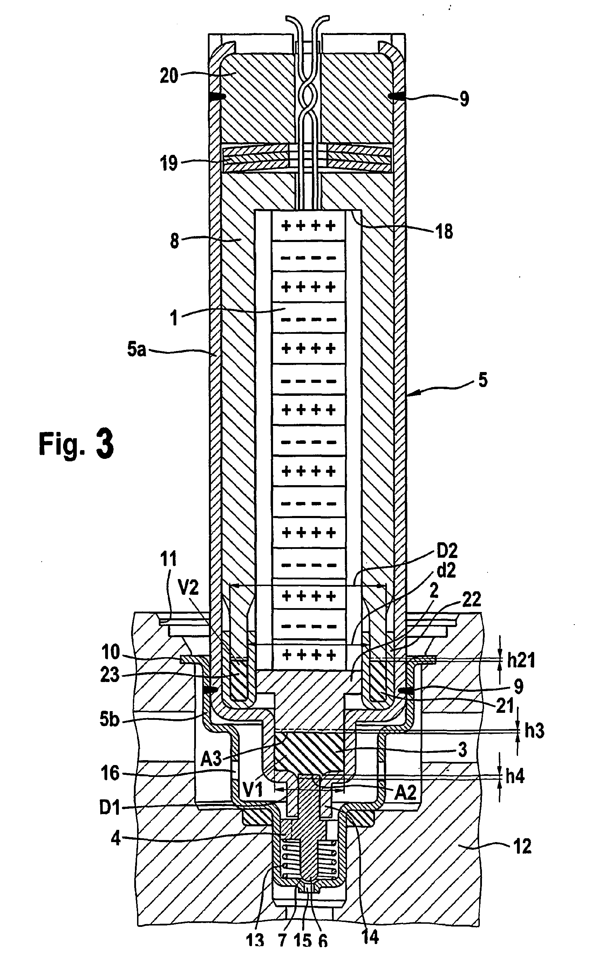

Das in der Figur 3 in einer Schnittdarstellung erheblich vergrößert abgebildete Ventil hat einen in einem Ventilgehäuse 5 geführten Ventilstößel 4, der an einem Ende ein Ventilschließglied 6 aufweist. Das Ventilschließglied 6 ist einem im Ventilgehäuse 5 integrierten Ventilsitz 7 zugewandt, wobei das Ventilschließglied 6 mittels eines Piezoelements 1 mittelbar betätigt wird. Hierzu ist zwischen dem Piezoelement 1 und dem Ventilstößel 4 ein erstes als auch ein zweites Kraftübertragungselement 2, 3 angeordnet, wobei das erste Kraftübertragungselement 2 aus vorzugsweise einem metallischen Werkstoff hoher Festigkeit besteht, das bei elektrischer Aktivierung des Piezoelements 1 das zweite Kraftübertragungselement 3 elastisch verformt und es in Richtung auf den Ventilstößel 4 bewegt. Zur mechanischen Übersetzung der Piezobewegung in Richtung des Ventilstößels 4 ist die an der Stirnfläche des Ventilstößel 4 anliegende Kontaktfläche A2 des zweiten Kraftübertragungselements 3 kleiner als die am ersten Kraftübertragungselement 2 anliegende Kontaktfläche A3 des zur stufenlosen Übersetzung elastisch verformbaren zweiten Kraftübertragungselementes 3. Gleichzeitig ermöglicht die eingangs erwähnte Konstruktion, daß das zweite Kraftübertragungselement 3 den hydraulisch beaufschlagten Innenbereich des Ventilgehäuses 5 gegenüber dem trockenen Innenbereich des Ventilgehäuses 5 auf einfache und absolut sichere Weise abdichtet, wozu das zweite Kraftübertragungselement 3 vorteilhaft aus einem Elastomer, z. B. aus einer handelsüblichen Gummi-Reaktionsscheibe oder einem Silikonkissen besteht. Das zweite Kraftübertragungselement 3 läßt sich besonders einfach durch die Wahl der Einstelltiefe des Piezoelements 1 im Ventilgehäuse 5 vorspannen, um die erforderliche Dichtwirkung des zweiten Kraftübertragungselements 3 als auch die gewünschte Grundeinstellung des Ventilstößels 4 zu realisieren. Hierzu stützt sich das Piezoelement 1 mit seiner vom ersten Kraftübertragungsglied 2 abgewandten Stirnfläche an einem im Ventilgehäuse 5 geführten Ausgleichskolben 8 ab, der zur Grundeinstellung des Piezoelements 1 im Ventilgehäuse 5 von einem steifen Tellerfederpaket 19 beaufschlagt ist, das wiederum an einem in das Ventilgehäuse 5 eingefügten Verschlußstopfen 20 anliegt. Nach dem Abschluß der Grundeinstellung wird der Verschlußstopfen 20 beispielsweise mit dem oberen Hüsenabschnitt des Ventilgehäuses 5 verschweißt. Selbstverständlich sind auch kraft- und/oder formschlüssige Arretierungsmöglichkeiten für den Verschlußstopfen 20 denkbar.

Hingegen ist der Ausgleichskolben 8 zur Kompensation von thermisch bedingten Volumenänderungen des elastischen Kraftübertragungselements 3 verschiebbar zwischen dem Tellerfederpaket 19 und einem am Boden der abgestuften ersten Gehäusehülse 5a fixierten elastischen Masse 23 angeordnet. Die elastische Masse 23 ist hierzu konstruktiv auf einfache Weise als Ausgleichsring 21 in einem Ausgleichstopf 22 eingebettet, so daß auch handelsübliche Elastomerringe verwendet werden können. Der Ausgleichskolben 8 ist entsprechend der Geometrie des Ausgleichsrings 21 als Ringkolben ausgeführt, in dessen Hohlraum das Piezoelement 1 als Piezoblock in Stapelbauweise aufgenommen ist. Zur Kontaktierung des Ausgleichsrings 21 erstreckt sich der Kolbenmantel des Ausgleichskolbens 8 über die Bauhöhe des Piezoblocks hinaus bis auf den Ausgleichsring 21 im Ausgleichstopf 22 . Das erste Kraftübertragungselement 2 ist als entlang der Innenwandung des ringförmigen Ausgleichstopfs 22 geführter Kolben ausgebildet, der somit in Vertikalrichtung zwischen dem Piezoelement 1 und dem zweiten Kraftübertragungselement 3 angeordnet ist.

Das Ventilgehäuse 5 besteht aus den zwei abschnittsweise ineinander gefügten Gehäusehülsen 5a, 5b, die mittels einer Schweißverbindung 9 miteinander im Fügebereich verbunden sind. Die untere zweite Gehäusehülse 5b ist als gestufter Gehäusetopf ausgeführt, dessen nach außen rechtwinklig abgekröpfter Rand 10 in der gestuften Aufnahmebohrung 11 eines blockförmigen Ventilträgers 12 eingestemmt ist. Dieser Gehäusetopf weist an seinem Boden einen erste Druckmittelöffnung 15 mit dem beispielsweise im Prägeverfahren hergestellten Ventilsitz 7 auf. Mittels einer zwischen dem gestuften Ventilstößel 5 und dem Boden eingespannte Druckfeder 13 befindet sich das halbkugelförmige Ventilschließglied 6 in seiner vom Ventilsitz 7 abgehobenen Grundstellung. Der Ventilstößel 4 ist abschnittsweise entlang seinem Schaft in der unteren als auch in der oberen Gehäusehülse 5b, 5a geführt, wozu die koaxial zueinander ausgerichteten beiden Gehäusehülsen 5a, 5b abschnittsweise an den Außendurchmesser des Ventilstößels 4 angepaßt sind. Deshalb schließt sich am Boden der oberen ersten Gehäusehülse 5a ein im Innendurchmesser an den Außendurchmesser des Ventilstößels 4 angepaßter Hülsenvorsprung 14 an, in den sich gleichfalls das elastische Kraftübertragungselement 3 bis auf die Stirnfläche des Ventilstößels 4 erstreckt. Auf dem elastischen Kraftübertragungselement 3 befindet sich das als Stufenkolben ausgeführte steife Kraftübertragungselement 2, dessen Kolbenwand sowohl entlang der Innenfläche des Ausgleichstopfs 22 als auch entlang der Innenfläche der gestuften Gehäusehülse 5a abschnittsweise geführt ist. Das elastische Kraftübertragungselement 3 ist nach Art einer Gummi-Reaktionsscheibe zwischen dem transversal bewegbaren ersten Kraftübertragungselement 2 und der Ringfläche am Boden der gestuften Gehäusehülse 5a eingespannt.

Beim Anlegen einer Spannung an das Piezoelement 1 wird durch das Piezoelement 1 eine Verstellkraft erzeugt, die auf das steife Kraftübertragungselement 2 wirkt, wodurch die Masse des elastischen Kraftübertragungselements 3 in Richtung des geringsten mechanischen Widerstands weiter in die Öffnung des am Boden der Gehäusehülse 5a angeformten Hülsenvorsprungs 14 verdrängt wird, um den von dem zweiten Kraftübertragungselement 3 im Hülsenvorsprung 14 beaufschlagte Ventilstößel 4 entgegen der Wirkung der nachgiebigen Druckfeder 13 stetig in Richtung des Ventilsitzes 7 zu bewegen. Der elektrisch initiierte minimale Piezohub wird dann im Verhältnis der kraftbeaufschlagten Stirnflächen A2, A3 am zweiten Kraftübertragungselement 3 im Sinne eines vergrößerten Ventilstößelhubs übersetzt, weshalb die durch den Öffnungsquerschnitt des Hülsenvorsprung 14 festgelegte Stirnfläche A2 des zweiten Kraftübertragungselements 3 wesentlich kleiner gewählt ist als die vom ersten Kraftübertragungselement 2 beaufschlagte Stirnfläche A3 des zweiten Kraftübertragungselements 3.

Mit dem Anliegen des Ventilschließgliedes 6 am Ventilsitz 7 ist zwangsläufig die Druckmittelverbindung zwischen der am Boden der zweiten Gehäusehülse 5b angeordneten Druckmittelöffnung 15 und der oberhalb des Ventilschließgliedes 6 in der Gehäusewandung angeordneten zweiten Druckmittelöffnung 16 unterbrochen.

Zur Kompensation von temperaturabhängigen Längenänderungen ist das Piezoelement 1 zwischen dem ersten Kraftübertragungselement 2 und einem elastisch vorgespannten Ausgleichskolben 8 angeordnet, dessen Kolbenstellung durch die physikalischen Eigenschaften der im Ventilgehäuse 5 fixierten elastischen Masse 24 beeinflußt wird.

Die physikalischen Eigenschaft der elastischen Masse 23, insbesondere deren temperaturabhängigen Volumenveränderung, entspricht deshalb der physikalischen Eigenschaft des zweiten Kraftübertragungselements 3, welches zur linearen Übersetzung des Piezohubs zweckmäßig zwischen dem ersten Kraftübertragungselement 2 und dem Boden des Ventilgehäuses 5 elastisch eingespannt ist.

Das Ventil verfügt demnach über einen Ausgleichsmechanismus, um die thermische Ausdehnung des elastischen Kraftübertragungselements 3 zu kompensieren, da der vergleichsweise große Wärmeausdehnungskoeffizient der für das Kraftübertragungselement 3 verwendeten Elastomere den relativ kleinen Ventilhub beeinträchtigen würde. Diesen temperaturabhängigen Dehnungsausgleich wird baulich durch den Ausgleichsring 21 bewirkt, der vorteilhaft aus dem Material des elastischen Kraftübertragungselements 3 besteht.

Durch die thermische Ausdehnung des Ausgleichsringes 21 wird nämlich der Ausgleichskolben 8 gegen das steif vorgespannte Tellerfederpaket 19 um den Hub h21 verschoben, wodurch der thermisch bedingt Hub h3 des Kraftübertragungselements 3 kompensiert wird, ohne eine unerwünschte Veränderung des mittels der stetigen mechanischen Übersetzung erzielbaren Ventilhubs h4 herbeizuführen.

Das Volumen V2 des Ausgleichsrings 21 ist deshalb zum Ausgleich der temperaturabhängigen Volumenänderung am elastischen Kraftübertragungselement 3 nach folgender Formel festzulegen:

$$V2 = [V1 \times (D2^2 - d2^2)] / D1^2$$

Hierin bedeutet:

V1 Volumen des elastischen Kraftübertragungselements 3

D1 Außendurchmesser des elast. Kraftübertragungselements

V2 Volumen des Ausgleichrings 21

D2 Außendurchmesser des Ausgleichrings 21

d2 Innendurchmesser des Ausgleichsrings 21

Anstelle der Verwendung eines Elastomers als elastische Masse 23 wäre zwar auch eine Verwendung einer Flüssigkeitsfüllung, z.B. Silikonöl o. dgl. denkbar, allerdings würde dies an den Grenzflächen der Flüssigkeit eine zusätzliche Abdichtmaßnahme im Ventilgehäuse 5 erfordern, um ein Flüssigkeitsverlust und/oder eine Vermischung unterschiedlicher Flüssigkeiten zu verhindern.

Das zweiteilige Ventilgehäuse 5 und der Ausgleichstopf 22 sind durch Tiefziehen von Dünnblech einfach in der abgebildeten Stufenkontur hergestellt.

Der vorgeschlagene Aufbau des Ventils ermöglicht überdies in der geschlossenen Stellung des Ventilschließgliedes 6 eine Sensierung des an ihm anstehenden hydraulischen Drucks, da über die beiden Kraftübertragungselemente 2, 3 eine hydraulische Rückwirkung auf das Piezoelement 1 erfolgt, dessen aus der mechanischen Druckbeanspruchung resultierende elektrische Spannungänderung mittels einer elektronischen Auswerteeinheit in einen Druckwert umgerechnet wird.

Bezugszeichenliste

| | |
|---|---|
| 1 | Piezoelement |
| 2 | Kraftübertragungselement |
| 3 | Kraftübertragungselement |
| 4 | Ventilstößel |
| 5 | Ventilgehäuse |
| 6 | Ventilglied |
| 7 | Ventilsitz |
| 8 | Ausgleichskolben |
| 9 | Schweißverbindung |
| 10 | Rand |
| 11 | Aufnahmebohrung |
| 12 | Ventilträger |
| 13 | Druckfeder |
| 14 | Hülsenvorsprung |
| 15 | Druckmittelöffnung |
| 16 | Druckmittelöffnung |
| 17 | Stößelkragen |
| 18 | Sackbohrung |
| 19 | Tellerfederpaket |
| 20 | Verschlußstopfen |
| 21 | Ausgleichsring |
| 22 | Ausgleichstopf |
| 23 | Masse |
| 24 | Deckel |

**Patentansprüche**

1. Ventil, insbesondere für schlupfgeregelte Radbremsen, mit einem in einem Ventilgehäuse (5) geführten Ventilstößel (4), der ein Ventilschließglied (6) aufweist, mit einem dem Ventilschließglied (6) zugewandten Ventilsitz (7), sowie mit einem Piezoelement (1) zur Betätigung des Ventilschließgliedes (6), wobei zwischen dem Piezoelement (1) und dem Ventilstößel (4) ein erstes als auch ein zweites Kraftübertragungselement (2, 3) angeordnet ist, wobei das erste Kraftübertragungselement (2) aus einem Werkstoff hoher Festigkeit besteht, das bei elektrischer Aktivierung des Piezoelements (1) das zweite Kraftübertragungselement (3) in Richtung auf den Ventilstößel (4) elastisch verformt, **gekennzeichnet durch** folgende Merkmale:

   - das Ventilgehäuse (5) ist **durch** Tiefziehen von Dünnblech hergestellt und besteht aus zwei abschnittsweise ineinander gefügte, koaxial zueinander ausgerichtete Gehäusehülsen (5a, 5b), wobei die untere Gehäusehülse (5b) als gestufter Gehäusetopf ausgeführt ist, der an seinem Boden eine erste Druckmittelöffnung (15) sowie den Ventilsitz (7) aufweist,
   - der Ventilstößel (4) ist abschnittsweise entlang seinem Schaft in der unteren als auch in der oberen Gehäusehülse (5b, 5a) geführt, wozu sich an den Boden der oberen Gehäusehülse (5a) ein an den Außendurchmesser des Ventilstößels (4) im Innendurchmesser angepaßter Hülsenvorsprung (14) anschließt, wodurch sich das zwischen dem ersten Kraftübertagungsglied (2) und dem Boden der oberen Gehäusehülse (5a) eingespannte zweite Kraftübertragungsglied (3) entlang dem Hülsenvorsprung (14) auf die Stirnfläche des Ventilstößels (4) erstreckt.

2. Ventil nach Anspruch 1, **dadurch gekennzeichnet, daß** zwecks mechanischer Übersetzung der Piezobewegung auf den Ventilstößel (4) die an der Stirnfläche des Ventilstößel (4) anliegende Kontaktfläche (A2) des zweiten Kraftübertragungselements (3) kleiner ist als die am ersten Kraftübertragungselement (2) anliegende Kontaktfläche (A3) des zweiten Kraftübertragungselementes (3).

3. Ventil nach Anspruch 1 oder 2, **dadurch gekennzeichnet, daß** das zweite Kraftübertragungselement (3) den hydraulisch beaufschlagten Innenbereich des Ventilgehäuses (5) gegenüber dem trockenen Innenbereich des Ventilgehäuses (5) abdichtet.

4. Ventil nach einem der Ansprüche 1-3, **dadurch gekennzeichnet, daß** das zweite Kraftübertragungselement (3) aus einem Elastomer oder einem Silikon besteht.

5. Ventil nach einem der vorangegangenen Ansprüche, **dadurch gekennzeichnet, daß** das zweite Kraftübertragungselement (3) durch die Wahl der Einstelltiefe des Piezoelements (1) im Ventilgehäuse (5) vorgespannt ist.

6. Ventil nach Anspruch 1, **dadurch gekennzeichnet, daß** sich das Piezoelement (1) mit seiner vom ersten Kraftübertragungsglied (2) abgewandten Stirnfläche an einem das Ventilgehäuse (5) verschließenden Deckel (24) abstützt, der zur Einstellung des Piezoelements(1) im Ventilgehäuse (5) verschiebbar ist.

7. Ventil nach Anspruch 1, **dadurch gekennzeichnet, daß** das Piezoelement (1) als Piezoblock in Stapelbauweise ausgeführt ist, und daß das erste Kraftübertragungsglied (2) als entlang der Innenwandung des Ventilgehäuses (5) geführter Kolben ausgebildet ist, der an dem als Kissen gestalteten zweiten Kraftübertragungsglied (2) anliegt.

8. Ventil nach einem der vorangegangenen Ansprüche, **dadurch gekennzeichnet, daß** zur Sensierung des hydraulischen Drucks mittels den beiden Kraftübertragungselementen (2, 3) der am Ventischließglied (6) anstehende Druck auf das Piezoelement (1) wirkt, dessen aus der mechanischen Verformung resultierende Spannungänderung mittels einer elektronischen Auswerteeinheit in einen Druckwert umgerechnet wird.

9. Ventil nach Anspruch 1, **dadurch gekennzeichnet, daß** das zweite Kraftübertragungselement (3) aus einem Silikonkissen besteht.

10. Ventil nach Anspruch 1, **dadurch gekennzeichnet, daß** das Piezoelement (1) zwischen dem ersten Kraftübertragungselement (2) und einem elastisch vorgespannten Ausgleichskolben (8) angeordnet ist, dessen Kolbenstellung durch die physikalischen Eigenschaften einer im Ventilgehäuse (5) fixierten elastischen Masse (23) beeinflußt ist.

11. Ventil nach Anspruch 10, **dadurch gekennzeichnet, daß** die physikalischen Eigenschaften der elastischen Masse (23) den physikalischen Eigenschaften des zweiten Kraftübertragungselements (3) entsprechen, welches zwischen dem ersten Kraftübertragungselement (2) und dem Boden des Ventilgehäuses (5) elastisch eingespannt ist.

12. Ventil nach Anspruch 10, **dadurch gekennzeichnet, daß** die elastische Masse (23) als Ausgleichsring (21) in einem ringförmigen Ausgleichstopf (22) eingebettet ist, der sich an einem Boden einer Gehäusestufe des Ventilgehäuses (5) abstützt.

13. Ventil nach einem der vorangegangenen Ansprüche 10 bis 12, **dadurch gekennzeichnet, daß** der Ausgleichskolben (8) als Ringkolben ausgeführt ist, der mit seinem offenen Endabschnitt in den Ausgleichstopf (22) gerichtet ist und dort unter der Wirkung einer elastischen Vorspannkraft auf die elastische Masse (23) gepreßt ist.

14. Ventil nach Anspruch 13, **dadurch gekennzeichnet, daß** ein Tellerfederpaket (19) die am Ausgleichskolben (8) wirksame Vorspannkraft erzeugt, wobei das Tellerfederpaket (19) zwischen dem geschlossenen Kolbenboden des Ausgleichskolbens (8) und einem am Ende des hülsenförmigen Ventilgehäuses (5) angeordneten Verschlußstopfen (20) eingespannt ist.

15. Ventil nach einem der vorangegangenen Ansprüche 10 bis 14, **dadurch gekennzeichnet, daß** das erste Kraftübertragungselement (2) als Kolben ausgeführt ist, dessen Kolbenmantel in der Öffnung des ringförmigen Ausgleichtopfes (22) geführt ist und daß das erste Kraftübertragungselement (2) in die Öffnung des Ventilgehäuses (5) eintaucht, in der das elastisch verformbare zweite Kraftübertragungselement (3) flüssigkeitsundurchlässig eingesetzt ist.

16. Ventil nach einem der vorangegangenen Ansprüche 10 bis 13, **dadurch gekennzeichnet, daß** die elastische Masse (23) aus einer Gummi-Reaktionsscheibe und das zweite Kraftübertragungselement (3) aus einem Gummiring besteht.

17. Ventil nach Anspruch 10, **dadurch gekennzeichnet, daß** das Ventilgehäuse (5) aus zwei an ihren Enden abschnittsweise ineinander gefügte erste und zweite Gehäusehülsen (5a, 5b) besteht, wovon die das Piezoelement (1) aufweisende Gehäusehülse (5a) mit den beiden Kraftübertragungselementen (2, 3), dem Ausgleichsring (21), dem Ausgleichstopf (22), dem Ausgleichskolben (8) und dem Verschlußstopfen (20) zu einer eigenständig handhabbaren Baugruppe zusammengefaßt ist.

18. Ventil nach Anspruch 17, **dadurch gekennzeichnet, daß** zwischen den beiden Gehäusehülsen (5a, 5b) die Druckfeder (13) und der Ventilstößel (4) eingesetzt sind, wobei der Ventilstößel (4) an dem vom Ventilsitz (7) im Ventilgehäuse (5) abgewandten Abschnitt in einem Hülsenvorsprung (14) an der ersten Gehäusehülse (5a) geführt ist.

19. Ventil nach Anspruch 10, **dadurch gekennzeichnet, daß** zwecks mechanischer Übersetzung der Piezobewegung auf den Ventilstößel (4) die an der Stirnfläche des Ventilstößel (4) anliegende Kontaktfläche (A2) des zweiten Kraftübertragungselements (3) kleiner ist als die am ersten Kraftübertragungselement (2) anliegende Kontaktfläche (A3) des zweiten Kraftübertragungselementes (3).

20. Ventil nach einem der vorangegangenen Ansprüche, **dadurch gekennzeichnet, daß** das zweite Kraftübertragungselement (3) den hydraulisch beaufschlagten Innenbereich des Ventilgehäuses (5) gegenüber dem trockenen Innenbereich des Ventilgehäuses (5) abdichtet.

21. Ventil nach einem der vorangegangenen Ansprüche, **dadurch gekennzeichnet, daß** zur Sensierung des hydraulischen Drucks mittels den beiden Kraftübertragungselementen (2, 3) der am Ventischließglied (6) anstehende Druck auf das Piezoelement (1) wirkt, dessen aus der mechanischen Verformung resultierende Spannungänderung mittels einer elektronischen Auswerteeinheit in einen Druckwert umgerechnet wird.

## Claims

1. Valve, especially for slip-controlled wheel brakes, with a valve tappet (4) guided in a valve housing (5) and including a valve closure member (6), with a valve seat (7) facing the valve closure member (6), and with a piezoelectric element (1) for actuating the valve closure member (6), wherein a first and a second force transmission element (2, 3) is interposed between the piezoelectric element (1) and the valve tappet (4), and the first force transmission element (2) is made of a high-strength material which elastically deforms the second force transmission element (3) in the direction of the valve tappet (4) when the piezoelectric element (1) is activated electrically, **characterized by** the following features:

   - the valve housing (5) is deepdrawn from thin sheet and comprises two coaxially aligned housing sleeves (5a, 5b) being jointed in sections into one another, with the bottom housing sleeve (5b) being configured as a stepped housing bowl which includes a first pressure fluid opening (15) and the valve seat (7) at its bottom,
   - the valve tappet (4) is guided in sections along its stem in the bottom and in the top housing sleeve (5a, 5b), to what end a sleeve projection (14) whose inside diameter is conformed to the outside diameter of the valve tappet (4) succeeds the bottom of the top housing sleeve (5a), with the result that the second force transmission element (3) which is compressed between the first force transmission element (2) and the bottom of the top housing sleeve (5a) extends along the sleeve projection (14) towards the end surface of the valve tappet (4).

2. Valve as claimed in claim 1, **characterized in that** for the mechanic translation of the piezoelectric movement onto the valve tappet (4), the contact surface (A2) of the second force transmission element (3) that abuts on the end surface of the valve tappet (4) is smaller than the contact surface (A3) of the second force transmission element (3), said contact surface (A3) abutting on the first force transmission element (2).

3. Valve as claimed in claim 1 or 2, **characterized in that** the second force transmission element (3) seals the hydraulically applied inside area of the valve housing (5) in relation to the dry inside area of the valve housing (5).

4. Valve as claimed in any one of claims 1 to 3, **characterized in that** the second force transmission element (3) is composed of an elastomer or a silicone element.

5. Valve as claimed in any one of the preceding claims, **characterized in that** the second force transmission element (3) is preloaded by choosing the adjustment depth of the piezoelectric element (1) in the valve housing (5).

6. Valve as claimed in claim 1, **characterized in that** the piezoelectric element (1) is supported with its end surface remote from the first force transmission element (2) on a cover (24) that closes the valve housing (5) and is displaceable for adjusting the piezoelectric element (1) in the valve housing (5).

7. Valve as claimed in claim 1, **characterized in that** the piezoelectric element (1) is configured as a piezo block in a stack-type construction, and **in that** the first force transmission element (2) is configured as a piston that is guided along the inside wall of the valve housing (5) and bears against the second force transmission element (3) designed as a cushion.

8. Valve as claimed in any one of the preceding claims, **characterized in that** for sensing the hydraulic pressure by way of the two force transmission elements (2, 3), the pressure applied to the valve closure member (6) acts on the piezoelectric element (1), and the electric change in voltage of the piezoelectric element resulting from the mechanical deformation is converted into a pressure value by means of an electronic evaluating unit.

9. Valve as claimed in claim 1, **characterized in that** the second force transmission element (3) is composed of a silicone cushion.

10. Valve as claimed in claim 1, **characterized in that** the piezoelectric element (1) is arranged between the first force transmission element (2) and an elastically preloaded compensating piston (8), whose position is influenced by the physical properties of an elastic mass (23) fixed in the valve housing (5).

11. Valve as claimed in claim 10, **characterized in that** the physical properties of the elastic mass (23) correspond to the physical properties of the second force transmission element (3) which is elastically compressed between the first force transmission element (2) and the bottom of the valve housing (5).

12. Valve as claimed in claim 10, **characterized in that** the elastic mass (23) is embedded as a compensating ring (21) into an annular compensating bowl (22) that is supported on a bottom of a housing step of the valve housing (5).

**13.** Valve as claimed in any one of the preceding claims 10 to 12, **characterized in that** the compensating piston (8) is designed as an annular piston which points with its open end portion into the compensating bowl (22) and is pressed there onto the elastic mass (23) by the action of an elastic preloading force.

**14.** Valve as claimed in claim 13, **characterized in that** a cup spring assembly (19) produces the preloading force active on the compensating piston (8), with the cup spring assembly (19) being compressed between the closed bottom of the compensating piston (8) and a closure plug (20) arranged at the end of the sleeve-shaped valve housing (5).

**15.** Valve as claimed in any one of the preceding claims 10 to 14, **characterized in that** the first force transmission element (2) is designed as a piston having its piston skirt guided in the opening of the annular compensating bowl (22), and **in that** the first force transmission element (2) plunges into the opening of the valve housing (5) wherein the elastically deformable second force transmission element (3) is inserted in a fluid-impermeable fashion.

**16.** Valve as claimed in any one of the preceding claims 10 to 13, **characterized in that** the elastic mass (23) is composed of a rubber reaction disc and the second force transmission element (3) is composed of a rubber ring.

**17.** Valve as claimed in claim 10, **characterized in that** the valve housing (5) comprises two first and second housing sleeves (5a, 5b) that are jointed in sections into one another at their ends, with the housing sleeve (5a) including the piezoelectric element (1) being grouped with the two force transmission elements (2, 3), the compensating ring (21), the compensating bowl (22), the compensating piston (8), and the closure plug (20) to form an independent assembly.

**18.** Valve as claimed in claim 17, **characterized in that** the compression spring (13) and the valve tappet (4) are mounted between the two housing sleeves (5a, 5b), with the valve tappet (4) at the portion remote from the valve seat (7) in the valve housing (5) being guided in a sleeve projection (14) at the first housing sleeve (5a).

**19.** Valve as claimed in claim 10, **characterized in that** for the purpose of mechanical transmission of the piezoelectric movement onto the valve tappet (4), the contact surface (A2) of the second force transmission element (3) that abuts on the end surface of the valve tappet (4) is smaller than the contact surface (A3) of the second force transmission element (3), said contact surface (A3) abutting on the first force transmission element (2).

**20.** Valve as claimed in any one of the preceding claims, **characterized in that** the second force transmission element (3) seals the hydraulically applied inside area of the valve housing (5) in relation to the dry inside area of the valve housing (5).

**21.** Valve as claimed in any one of the preceding claims, **characterized in that** for sensing the hydraulic pressure by means of the two force transmission elements (2, 3), the pressure applied to the valve closure member (6) acts on the piezoelectric element (1), and the electric change in voltage of the piezoelectric element resulting from the mechanical deformation is converted into a pressure value by means of an electronic evaluating unit.

## Revendications

**1.** Soupape, en particulier pour freins de roues à régulation du glissement, comportant un poussoir de soupape (4) guidé dans un boîtier de soupape (5), lequel comporte un obturateur de soupape (6), comportant un siège de soupape (7) tourné vers l'obturateur de soupape (6), ainsi qu'un piézo-élément (1) pour l'actionnement de l'obturateur de soupape (6), un premier ainsi qu'un deuxième élément de transmission des forces (2, 3) étant disposés entre le piézo-élément (1) et le poussoir de soupape (4), le premier élément de transmission des forces (2) étant constitué d'un matériau de grande résistance qui, lors de l'activation électrique du piézo-élément (1), déforme élastiquement le deuxième élément de transmission des forces (3) en direction du poussoir de soupape (4), **caractérisée par** les caractéristiques suivantes :

- le boîtier de soupape (5) est fabriqué par emboutissage profond d'une tôle mince et est constitué de deux douilles de boîtier (5a, 5b) orientées coaxialement l'une à l'autre, assemblées l'une dans l'autre par endroits, la douille de boîtier inférieure (5b) étant réalisée sous la forme d'un pot de boîtier étagé qui présente, sur son fond, une première ouverture pour fluide sous pression (15) ainsi que le siège de soupape (7),
- le poussoir de soupape (4) est guidé par endroits le long de sa tige dans la douille de boîtier inférieure de même que supérieure (5b, 5a), une saillie de douille (14) dont le diamètre intérieur est adapté au diamètre extérieur du poussoir de soupape (4), se raccordant à cet effet au fond de la douille de boîtier supérieure (5a), ce qui fait que le deuxième élément de transmission des forces (3), serré entre le premier élément de transmission des forces (2) et le fond de la douille de boîtier supérieure (5a), s'étend le long de la saillie de douille (14) sur la face frontale du poussoir de soupape (4).

2. Soupape selon la revendication 1, **caractérisée en ce que** pour la transmission mécanique du piézo-mouvement au poussoir de soupape (4), la surface de contact (A2), s'appliquant contre la face frontale du poussoir de soupape (4), du deuxième élément de transmission des forces (3), est inférieure à la surface de contact (A3), s'appliquant contre le premier élément de transmission des forces (2), du deuxième élément de transmission des forces (3).

3. Soupape selon la revendication 1 ou 2, **caractérisée en ce que** le deuxième élément de transmission des forces (3) rend étanche la zone intérieure, sollicitée hydrauliquement, du boîtier de soupape (5), par rapport à la zone intérieure sèche du boîtier de soupape (5).

4. Soupape selon l'une des revendications 1 à 3, **caractérisée en ce que** le deuxième élément de transmission des forces (3) est réalisé dans un élastomère ou une silicone.

5. Soupape selon l'une des revendications précédentes, **caractérisée en ce que** le deuxième élément de transmission des forces (3) est précontraint par la sélection de la profondeur de réglage du piézo-élément (1) dans le boîtier de soupape (5).

6. Soupape selon la revendication 1, **caractérisée en ce que** le piézo-élément (1) prend appui, par sa face frontale tournée à l'opposé du premier élément de transmission des forces (2), contre un couvercle (24) fermant le boîtier de soupape (5), lequel peut coulisser dans le boîtier de soupape (5) pour régler le piézo-élément (1).

7. Soupape selon la revendication 1, **caractérisée en ce que** le piézo-élément (1) est réalisé sous la forme d'un piézobloc dans une construction à empilage, et **en ce que** le premier élément de transmission des forces (2) est réalisé sous la forme d'un piston guidé le long de la paroi intérieure du boîtier de soupape (5), lequel piston s'applique contre le deuxième élément de transmission des forces (2) réalisé sous la forme d'un coussin.

8. Soupape selon l'une des revendications précédentes, **caractérisée en ce que** pour détecter la pression hydraulique au moyen des deux éléments de transmission des forces (2, 3), la pression qui s'applique sur l'obturateur de soupape (6), agit sur le piézo-élément (1) dont la variation de la tension, résultant de la déformation mécanique, est convertie par le calcul en une valeur de pression, au moyen d'une unité d'exploitation électronique.

9. Soupape selon la revendication 1, **caractérisée en ce que** le deuxième élément de transmission des forces (3) est constitué d'un coussin de silicone.

10. Soupape selon la revendication 1, **caractérisée en ce que** le piézo-élément (1) est disposé entre le premier élément de transmission des forces (2) et un piston de compensation (8) précontraint élastiquement dont la position de piston est influencée par les propriétés physiques d'une masse élastique (23) fixée dans le boîtier de soupape (5).

11. Soupape selon la revendication 10, **caractérisée en ce que** les propriétés physiques de la masse élastique (23) correspondent aux propriétés physiques du deuxième élément de transmission des forces (3) lequel est serré élastiquement entre le premier élément de transmission des forces (2) et le fond du boîtier de soupape (5).

12. Soupape selon la revendication 10, **caractérisée en ce que** la masse élastique (23) est noyée, en tant qu'anneau de compensation (21), dans un pot de compensation (22) de forme annulaire qui prend appui contre un fond d'un gradin du boîtier de soupape (5).

13. Soupape selon l'une des revendications 10 à 12 précédentes, **caractérisée en ce que** le piston de compensation (8) est réalisé sous la forme d'un piston annulaire qui est dirigé, par son segment d'extrémité ouvert, dans le pot de compensation (22) et y est pressé sur la masse élastique (23), sous l'effet d'une force de précontrainte élastique.

14. Soupape selon la revendication 13, **caractérisée en ce qu'**un paquet de ressorts Belleville (19) produit la force de précontrainte agissant sur le piston de compensation (8), le paquet de ressorts Belleville (19) étant serré entre le fond de piston fermé du piston de compensation (8) et un bouchon de fermeture (20) disposé à l'extrémité du boîtier de soupape (5) en forme de douille.

15. Soupape selon l'une des revendications 10 à 14 précédentes, **caractérisée en ce que** le premier élément de transmission des forces (2) est réalisé sous la forme d'un piston dont l'enveloppe de piston est guidée dans l'ouverture du pot de compensation (22) de forme annulaire, et **en ce que** le premier élément de transmission des forces (2) pénètre à l'intérieur de l'ouverture du boîtier de soupape (5) dans laquelle le deuxième élément de transmission des forces (3), déformable élastiquement, est inséré de manière imperméable aux liquides.

**16.** Soupape selon l'une des revendications 10 à 13 précédentes, **caractérisée en ce que** la masse élastique (23) est constituée d'une rondelle de réaction en caoutchouc et le deuxième élément de transmission des forces (3) d'un anneau en caoutchouc.

**17.** Soupape selon la revendication 10, **caractérisée en ce que** le boîtier de soupape (5) est constitué de deux premières et deuxièmes douilles de boîtier (5a, 5b) assemblées l'une dans l'autre par endroits, à leurs extrémités, dont la douille de boîtier (5a), comportant le piézo-élément (1), est réunie avec les deux éléments de transmission des forces (2, 3), l'anneau de compensation (21), le pot de compensation (22), le piston de compensation (8) et le bouchon de fermeture (20), pour former un ensemble pouvant être manipulé de manière autonome.

**18.** Soupape selon la revendication 17, **caractérisée en ce que** le ressort de pression (13) et le poussoir de soupape (4) sont insérés entre les deux douilles de boîtier (5a, 5b), le poussoir de soupape (4) étant guidé sur le segment tourné à l'opposé du siège de soupape (7), dans le boîtier de soupape (5), dans une saillie de boîtier (14) de la première douille de boîtier (5a).

**19.** Soupape selon la revendication 10, **caractérisée en ce que** pour la transmission mécanique du piézo-mouvement au poussoir de soupape (4), la surface de contact (A2) s'appliquant contre la face frontale du poussoir de soupape (4), du deuxième élément de transmission des forces (3), est inférieure à la surface de contact (A3) s'appliquant contre le premier élément de transmission des forces (2), du deuxième élément de transmission des forces (3).

**20.** Soupape selon l'une des revendications précédentes, **caractérisée en ce que** le deuxième élément de transmission des forces (3) rend étanche la zone intérieure, sollicitée hydrauliquement, du boîtier de soupape (5), par rapport à la zone intérieure sèche du boîtier de soupape (5).

**21.** Soupape selon l'une des revendications précédentes, **caractérisée en ce que** pour détecter la pression hydraulique au moyen des deux éléments de transmission des forces (2, 3), la pression qui s'applique sur l'obturateur de soupape (6), agit sur le piézo-élément (1) dont la variation de la tension, résultant de la déformation mécanique, est convertie par le calcul en une valeur de pression, au moyen d'une unité d'exploitation électronique.

EP 1 363 820 B1

# Fig. 1

12

**Fig. 2**

**Fig. 3**